# EUROPEAN PATENT SPECIFICATION

(11) **EP 4 423 315 B1**
(45) Date of publication and mention of the grant of the patent: **04.03.2026**
(21) Application number: 22839690.9
(22) Date of filing: 15.12.2022
(51) Int. Cl.: C25B 1/04, C25B 11/03, C25B 11/052, C25B 11/075, C25B 11/077, C23C 4/00, C25B 11/031, C25B 11/091

(54) **NICKEL-BASED ANODE FOR OXYGEN EVOLUTION**
ANODE AUF NICKELBASIS ZUR SAUERSTOFFENTWICKLUNG
ANODE À BASE DE NICKEL POUR DÉGAGEMENT D'OXYGÈNE

(30) Priority: 16.12.2021 EP 21215251
(43) Date of publication of application: 04.09.2024
(73) Proprietor: Industrie De Nora S.P.A., 20134 Milano (IT)
(72) Inventor: PINO, Francesco, 20134 Milan (IT)
(74) Representative: Reitstötter Kinzebach
(86) International application number: PCT/EP2022/086245
(87) International publication number: WO 2023/111223

(56) References cited:
- HENNE R ET AL: "LOW PRESSURE PLASMA SPRAYING-PROPERTIES AND POTENTIAL FOR MANUFACTURING IMPROVED ELECTROLYSERS", THIN SOLID FILMS, ELSEVIER, AMSTERDAM, NL, vol. 119, no. 2, 1 September 1984 (1984-09-01), pages 141 - 152, XP001311010, ISSN: 0040-6090
- MIOUSSE D ET AL: "Hydrogen evolution reaction on Ni-AI-Mo and Ni-AI electrodes prepared by low pressure plasma spraying", JOURNAL OF APPLIED ELECTROCHEMISTRY, 1 January 1995 (1995-01-01), pages 592 - 602, XP093034046, Retrieved from the Internet <URL:https://link.springer.com/content/pdf/10.1007/BF00573217.pdf?pdf=inline%20link> [retrieved on 20230323]
- SINGH H ET AL: "Hot corrosion of a plasma sprayed Ni3 Al coating on a Ni-base superalloy", MATERIALS AND CORROSION, WILEY, vol. 58, no. 11, 1 November 2007 (2007-11-01), pages 857 - 866, XP001510696, ISSN: 0947-5117, DOI: 10.1002/MACO.200704072

## Description

### FIELD OF THE INVENTION

The present invention concerns a nickel-based anode for oxygen evolution in electrolytic processes, especially an oxygen-evolving anode employed in electrochemical cells for alkaline water electrolysis and its method of production.

### BACKGROUND OF THE INVENTION

Alkaline water electrolysis is typically carried out in electrochemical cells where an anodic and a cathodic compartment are divided by a suitable separator such as a diaphragm or a membrane. An aqueous alkaline solution at a pH higher than 7, for instance an aqueous KOH solution, is supplied to the cell and an electrical current flow is established between electrodes in the cathodic and anodic compartment, respectively, i.e. between cathode and anode, at a potential difference (cell voltage) with a typical range of 1.8 to 2.4 V. Under these conditions, water is split into its constituents so that gaseous hydrogen evolves at the cathode and gaseous oxygen evolves at the anode. The gaseous products are removed from the cell so that the cell can be operated in a continuous fashion. The anodic oxygen evolution reaction in alkaline media can be summarized as follows:

4 OH⁻ → O₂ + 2 H₂O + 4 e⁻

Alkaline water electrolysis is typically carried out in a temperature range from 40 to 90 °C. Alkaline water electrolysis is a promising technology in the field of energy storage, particularly storage of energy from fluctuating renewable energy sources such as solar and wind energy.

In this respect, it is particularly important to reduce the cost of the technology in terms of less expensive equipment, such as less expensive electrodes, but also in terms of efficiency of the overall process. One important aspect of cell efficiency concerns the required cell voltage in order to effectively generate water electrolysis. The overall cell voltage is essentially governed by the reversible voltage, i.e. the thermodynamic contribution to the overall reaction, voltage losses due to Ohmic resistances in the system, the hydrogen overpotential relating to the kinetics of the hydrogen evolution reaction at the cathode and the oxygen overpotential relating to the kinetics of the oxygen evolution reaction at the anode.

The oxygen evolution reaction has a sluggish kinetic, which is the cause of the high overpotential of the anode. The result is the increase of the operating cell voltage and the difficulty of the large-scale commercialization of the technology.

Moreover, electrodes for water electrolysis should exhibit a certain resistance to unprotected shutdowns. In fact, during typical operation of an electrolysis plant made of a stack of single electrochemical cells, it is often requested to stop the power supply due to technical problems maintenance, causing and inversion of polarity harmful for the electrodes. Such inversion is usually avoided using an external polarisation system (or polarizer) which maintains the electrical current flow in the desired direction. This ancillary component circumvents the potential electrode degradation caused by metal dissolution or electrode corrosion but increase the investment cost of the system.

In prior art, preferred anodes/anodic catalysts for alkaline water electrolysis include bare nickel (Ni) electrodes and electrodes having noble metal-based catalytic coatings, for instance, iridium (Ir) oxide-based catalytic coatings.

A bare nickel anode is formed by a nickel substrate only, such as a Ni mesh, which can easily be manufactured at low cost but which exhibits a high oxygen overpotential resulting in sluggish kinetics.

Anodes with iridium-based catalytic coatings are produced by thermal decomposition which is a well-established technology. However, iridium used in these electrodes is one of the least abundant noble metals in the earth's crust resulting not only in a high price but also in difficulties purchasing bulk quantities for industrial-scale manufacturing processes (for instance, gold is 40 times more abundant and platinum is 10 times more abundant than iridium). Moreover, iridium-based coatings are typically multilayer coatings resulting in costly manufacturing processes. The multilayer catalytic coatings of prior art can comprise, for instance, a LiNiOₓ interlayer directly applied on a Ni substrate, a NiCoOₓ active layer applied to the interlayer and an iridium oxide outer layer. This multilayer composition exhibits a low resistance to unprotected shutdowns because Co and Ir are typically dissolved into the electrolyte solution during inversion of polarity.

Raney nickel electrodes are manufactured by thin film deposition of the catalytic powder of Ni+Al by plasma spray technique. Such Raney nickel electrodes are for instance described in Henne R. et al., "Low pressure plasma spraying-properties and potential for manufacturing improved electrolysers", THIN SOLID FILMS, vol. 119, no. 2, pages 141-152 (1984-09-01). At the industrial level, plasma spray technique is not often used for catalytic coatings due to the high cost of production and health and safety hazards associated with the technique, such as noise, explosiveness, intense flame at temperatures above 3000°C, fumes, etc. Moreover, the Raney nickel manufacturing process involves an activation process which is accomplished by leaching of aluminium from the catalyst coating, leaving almost pure nickel on the surface and increasing the surface area substantially. Another technical problem of Raney nickel deposited via plasma spray is the resulting rather indented morphology of the coating. In a zero-gap cell, where the electrode is in contact with the membrane, the sharp indented surface may cause damage to the membrane. Moreover, Raney nickel electrodes are typically used as cathodes for hydrogen evolution in water electrolysis applications due to their high activity and consequently low hydrogen overvoltage. Under cathodic polarization, the fine pores of the Raney nickel electrodes are stable. However, Raney nickel electrodes are usually not employed as oxygen-evolving anodes because under anodic polarization, the formation of nickel hydroxide tends to collapse the pore structure.

To overcome certain drawbacks of Raney nickel cathodes, A. Kellenberger et al., "Roughness factor evaluation of thermal arc sprayed skeleton nickel electrodes", JOURNAL OF SOLID STATE ELECTROCHEMISTRY; CURRENT RESEARCH AND DEVELOPMENT IN SCIENCE AND TECHNOLOGY, vol. 11, no. 1, pages 84-89 (2005-11-04) describe porous nickel cathodes for hydrogen evolution which are obtained by depositing a layer of nickel and aluminium on a carbon steel plate employing a thermal arc sprayed technique using a nickel wire (97% Ni, 3% Ti) and an aluminium wire (99.5% Al). To increase the specific surface area of the electrode, the samples were submitted to alkaline leaching.

It is therefore an object of the present invention to provide an anode for oxygen evolution in electrochemical cells which avoids the use of costly noble metals such as iridium or ruthenium by resorting to a high-surface nickel-based anode while avoiding the electrochemical instability issues associated with Raney nickel electrodes used as anodes. The present invention also concerns a method for producing such an anode.

### SUMMARY OF THE INVENTION

The present invention concerns an anode for oxygen evolution in electrolytic processes as defined in claim 1, comprising a nickel-based planar substrate having a first side and a second side and a porous catalytic coating formed on at least one side of said substrate, wherein said porous catalytic coating exhibits a lamellar morphology made from metallic patches and void patches, said metallic patches being made from a material selected from nickel, nickel oxide, a nickel-aluminium alloy, said nickel-aluminium alloy being a low-alloy nickel component comprising at least 80 wt.% nickel, or combinations thereof. A "nickel-based" substrate in the sense of the present invention is a substrate which is essentially made from nickel or from a nickel alloy.

A "planar" substrate is a substrate which is substantially flat and essentially two-dimensional, i.e. a substrate which has dimensions in length and width which are much greater than the dimension perpendicular to the plane defined by its length and its width, i.e. its height or thickness.

The present invention is based on the observation that the poor electrochemical stability of electrocatalytic coatings based on Raney nickel under anodic polarization results from their highly porous structure with voids in the sub-micrometer range obtained by leaching aluminium from the Raney nickel alloy, i.e. from the nickel/aluminium alloy. While a large surface area of the catalytic coating associated with an increased catalytic activity is generally desired, a balance between electrochemical stability of an anode for industrial purposes and its electrochemical efficiency has to be established. The present inventors have surprisingly found that an increased electrochemical and mechanical stability of the anode can be obtained by providing the electrocatalytic coating with a particular morphology, namely a lamellar morphology made from metallic patches and void patches where the metallic patches are made from a material selected from nickel, nickel oxide, a nickel-aluminium alloy or combinations thereof.

A "lamellar morphology" in the sense of the present invention refers to a coating comprising metallic patches and void patches which predominantly have larger dimensions parallel to the planar substrate than perpendicular to the planar substrate. In cross-sectional SEM (scanning electron microscopy) images, a dimension parallel to the planar substrate can be considered as a diameter or length of the patch and a dimension perpendicular to the planar substrate can be considered as the height of the patch. In a majority of the metallic patches and void patches, the height of the patches is less than 30%, more preferably less than 20% of the diameter/length of the patch. According to the invention, the metallic patches are made predominantly from nickel, i.e. they are distinct from Raney nickel alloys and do not exhibit the microporous structure associated with Raney nickel after leaching of the aluminium component.

According to the invention, the metallic patches of the porous coating have a size distribution where the diameter or length, measured parallel to the planar substrate, is predominantly at least 25 µm, i.e. at least 50% of the metallic patches have a length of at least 25 µm. The height of the individual patches, measured perpendicular to the planar substrate, is typically less than 50% of their length, i.e. a majority of the metallic patches extend parallel to the substrate. This does not, however, exclude that individual patches may have a circular cross-sectional shape or even extend perpendicular to the substrate. In one embodiment, the porous catalytic coating has a void ratio in a range from 5 to 50%, preferably from 10 to 25%. The "void ratio" refers to the ratio of void patches to the overall area of a reference frame in a cross-sectional image of the coating, specifically of a SEM image or an optical microscopy image. The methodology of measuring the void ratio follows the scheme described by Ullah et al. in the article "A framework for image processing, analysis and visualization of materials microstructures using ImageJ package" (Chinese Journal of Stereology and Image Analysis, vol. 17, no. 4, December 2012, pp. 301-312).

The porous catalytic coating applied to one side of the substrate has a preferred thickness within a range from 50 µm to 200 µm, more preferably within a range from 100 µm to 180 µm. In one embodiment, the porous catalytic coating is formed on only one side of the metal substrate, preferably, however, the porous catalytic coating is formed on both sides of the metal substrate. When rather thin substrates are combined with relatively thick coatings, i.e. with coatings in a range up to 180 or 200 µm, mechanical stress can result in a bending of the substrate so that the resulting anode is no longer planar. Therefore, a coating applied on both sides of the substrate is generally preferred. In this case, the preferred thickness of the coating of 50 to 200 µm or 100 µm to 180 µm refers to the individual coating on each side.

In one embodiment, the metallic patches of the porous catalytic coating comprise 80 to 98 wt.% nickel or nickel oxide and 20 to 2 wt.% aluminium, referring to the metallic elements determined by via Energy-Dispersive X-ray Spectroscopy (EDX) scans. In one embodiment, the nickel component of the catalytic coating is predominantly metallic nickel, preferably comprising 0.1 to 2 vol.% nickel oxide determined by image analysis of SEM or optical microscopy images of cross-sections of sample anodes. Accordingly, the volume percentage of nickel oxide refers to reference frame of these images which includes metallic patches and void patches.

The void patches result in a surface area of porous catalytic coating within a range of 3 to 20 m²/g, preferably 5 to 10 m²/g, determined according to the BET (Brunauer, Emmett, Teller) analysis. Accordingly, the surface area of the catalytic coating of the present invention is well below the surface area of nickel Raney catalytic coatings which, due to the high proportion of sub-micrometer pores, is typically in a range between 30 and 40 m²/g but offers an increased mechanical and electrochemical stability, especially when acting as an anode in alkaline water electrolysis.

The nickel-based substrate is preferably a porous substrate allowing electrolyte and gas to penetrate through the substrate. The nickel-based substrate can, for instance, be an expanded metal sheet. Preferably, however, the nickel-based substrate is a nickel mesh having a thickness within the range of 0.2 to 1.5 mm. Preferred mesh thicknesses are in the range of 0.5 to 1.2 mm, preferably around 0.9 mm. Typical mesh openings are rhombic openings having a long width in range of 2 to 10 mm and a short width in the range of 1 to 5 mm.

In order to obtain the lamellar morphology of the porous catalytic coating defined above, an adapted production method has to be employed which avoids the sub-micron porous structure associated with Raney nickel electrodes. The present invention is based on the observation that the desired lamellar structure can be obtained by using a thermal spraying technique which, rather than employing powders of a nickel aluminium alloy used for producing Raney nickel electrodes, employs at least two different starting components, namely a first component which is predominantly a nickel component and a second component which is predominantly an aluminium component to produce an initial coating followed by leaching aluminium from the initial coating. In one embodiment, the first component is an essentially pure nickel component or a low-alloy nickel component and the second component is an essentially pure aluminium component or a low-alloy aluminium component. A "low-alloy component" means that the main metallic species (i.e. nickel for the first component and aluminium for the second component) comprises at least 80 wt.% of the respective component. It has, for instance, been observed that using essentially pure nickel or a low-alloy nickel up to, e.g., Ni80Al20 as a first component result in coatings having similar characteristics. The preferred thermal spraying technique used to obtain the electrode of the present invention can, for instance, be powder plasma spraying or electric wire-arc spraying. Therefore, under one aspect, the present invention concerns an anode for oxygen evolution wherein the porous catalytic coating is obtained by powder plasma spraying or electric wire-arc spraying an initial coating comprising a mixture of a first component comprising predominantly nickel and a second component comprising predominantly aluminium on at least one side of the substrate and subsequent leaching of aluminium from the initial coating. When starting materials comprising a first component made predominantly of nickel and a second component made predominantly of aluminium are employed, the resulting initial coating will have much larger nickel patches and aluminium patches than an electrode obtained with Raney nickel. Consequently, subsequent leaching of the aluminium component will result in the desired lamellar structure.

The present invention is therefore also concerned with a method for the production of an anode for oxygen evolution in electrolytic processes as defined in claim 1, comprising the following steps:
a) providing a planar nickel-based metal substrate having a first side and a second side;
b) providing a first coating material comprising at least nickel and providing a second coating material comprising at least aluminium;
c) depositing melted droplets from said first coating material and melted droplets from set second coating material on at least one side of said substrate to form an initial coating;
d) leaching of aluminium from said initial coating in an alkaline bath to form a porous catalytic coating.

In one embodiment, in step b), the first coating material is a nickel powder and the second coating material is an aluminium powder, and in step c), melted droplets of said nickel powder and melted droplets of said aluminium powder are deposited on the substrate via plasma spraying, preferably atmospheric plasma spraying.

In another embodiment, in step b), the first coating material is a first consumable metal wire comprising at least nickel and the second coating material is a second consumable wire comprising at least aluminium, and in step c), melted droplets from said first and second metal wires are deposited on said substrate via electric wire-arc spraying using preferably air as a carrier gas.

Besides being advantageous in terms of costs, safety and simplified manufacturing process, using air as a carrier has the further advantage of partially pre-oxidizing the nickel particles which imparts a beneficial effect on the coating catalytic properties for oxygen evolution.

In all of the above embodiments, an initial coating can be applied to both sides of the substrate in step c).

Leaching step d) is preferably carried out in an aqueous alkaline hydroxide solution at a temperature in the range from 10 to 100 °C for a time period between 10 min and 36 hrs, preferably between 2 and 24 hrs.

### BRIEF DESCRIPTION OF THE DRAWINGS

The invention will now be described in connection with certain preferred embodiments and corresponding figures in more detail.

In the drawings:
- Fig. 1: shows a schematic representation of an anode of the present invention having our nickel mesh substrate and a lamellar coating on both sides of the substrate;
- Fig. 2: shows a scheme for preparing an anode of the present invention using plasma spraying;
- Fig. 3: shows a scheme for preparing an anode of the present invention using twin wire-arc spraying;
- Fig. 4: shows a SEM-photograph of a cross-section an anode coated with an initial coating prior to Al leaching;
- Fig. 5: shows a SEM-photograph of a cross-section an anode coated with a final porous catalytic coating after Al leaching;
- Fig. 6: shows oxygen overvoltages of anodes of two embodiments of the present invention compared with anodes known in the art; and
- Fig. 7: shows a stability test of an anode according to one embodiment of the invention.

### DETAILED DESCRIPTION OF PREFERRED EMBODIMENTS

The present invention will now be described in more detail with reference to two embodiments where the porous catalytic coatings have been prepared using electric wire-arc spraying and plasma powder spraying, respectively. The anodes of the present invention will be compared to two counterexamples, namely to a bare nickel anode and an anode comprising a noble metal catalytic coating.

### A. Substrate

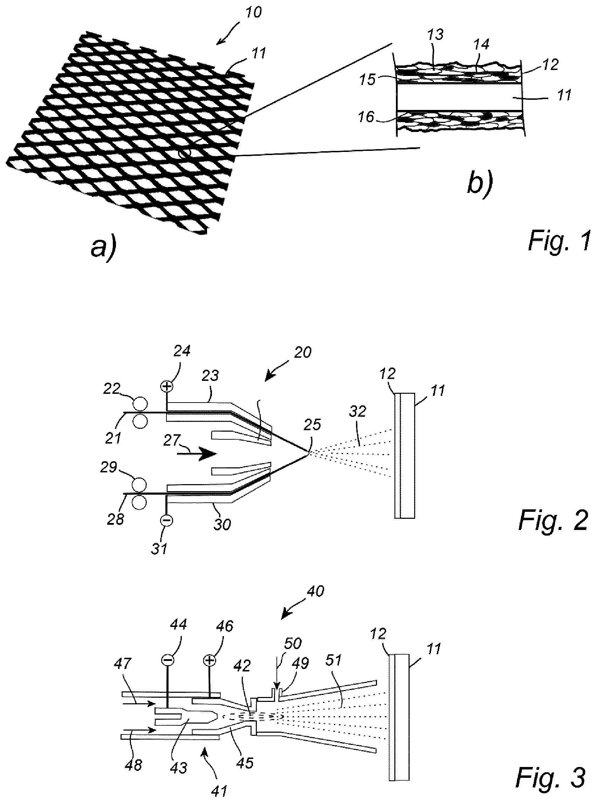

In all examples and counter-examples of the present description, a rhombic nickel mesh obtained by expanding and flattening a nickel sheet having a thickness of 0.5 mm has been used as an anode substrate. Fig. 1a) shows a schematic perspective view of an anode 10 according to the present invention. The anode 10 comprises a substrate 11 which is obtained by expanding and flattening a nickel sheet having a thickness of 0.5 mm which results in a nickel mesh having rhombic openings of 0.5 mm long width and 2.8 mm short width. After expanding and flattening the mesh, the substrate 11 was sandblasted. Similar substrates have been used for Examples 1 and 2 and Counter-Examples 1 and 2, respectively.

Fig. 1b) shows an enlarged cross-sectional view of the coated substrate in an embodiment where both sides of the substrate have been coated with a porous catalytic coating 12. As can be taken therefrom, the porous coating exhibits a lamellar morphology indicated by white patches 13 representing metallic patches and black patches 14 representing void patches. In the schematic drawing, it has been indicated that the metallic patches 13 and the void patches 14 extend essentially parallel to the upper surface 15 and the lower surface 16 of the substrate 11. According to the present invention, the desired lamellar morphology is obtained by producing molten droplets of nickel and molten droplets of aluminium which are sprayed onto the substrate. When impacting on the surface of the substrate, the droplets flatten and solidify leading to metallic nickel patches and metallic aluminium patches which essentially extend parallel to the surface of the substrate. The resulting initial coating already exhibits a lamellar morphology of nickel patches and aluminium patches. By leaching the aluminium from the aluminium patches, the aluminium patches are converted into the void patches of the final porous catalytic coating.

In order to generate molten droplets of metallic nickel and molten droplets of metallic aluminium, the present invention suggests to use electric wire-arc spraying or powder plasma spraying.

### B. Example 1 (EX1): Preparation of a nickel mesh electrode with a porous catalytic coating obtained by electric wire-arc spraying

In Example 1, the porous catalytic coating was obtained by applying an initial nickel and aluminium coating on the substrate using a twin-wire arc spraying system which is schematically shown in Fig. 2. The overall twin-wire arc spraying system is designated with reference sign 20. A first metal wire 21 made from nickel (or a nickel alloy such as Ni95Al5 or Ni80Al20) and having a diameter of 1.6 mm is fed by first feeding rollers 22 through a first contact tube 23 which establishes an electrical contact between the first metal wire 21 and a positive pole 24 of an electric power supply. The contact tube 23 guides the first wire towards a contact zone 25 in front of a nozzle 26 through which a jet of atomizing gas indicated by arrow 27, for instance compressed air, is blown towards the contact zone 25. A second wire 28 made from pure aluminium and also having a diameter of 1.6 mm is fed by second feeding rollers 29 through a second contact tube 30 which establishes an electrical connection of the wire with the negative pole 31 of a power supply. The power supply provided a variable current between 120A and 450A at a variable voltage between 20V and 35V. In the contact zone 25, the first and second wires 21, 28 are not brought in actual physical contact which would result in a short circuiting of the power supply but in close proximity to each other so that an electric arc can form between the tip of the first wire 21 and the tip of the second wire 28. The electric arc melts the tip portions of the first and second wires 21, 28 and the atomizing gas 27, fed at a pressure between 2 bar (30 psi) and 5.5 bar (80 psi), generates a spray jet 31 of molten droplets of the materials of the first wire 21 and of the second wire 23, respectively. The molten droplets impact on the nickel mesh substrate 11 arranged in the path of the molten droplets of the spray jet 31 and solidify forming a coating 12 comprising metallic nickel patches and metallic aluminium patches. The coating 12 exhibits an essentially lamellar structure of individual nickel patches and individual aluminium. Before leaching, the lamellar structures exhibited a volumetric aluminium content between 3 vol.% and 15 vol.% determined by image analysis of optical microscopy images or SEM images. The volumetric ratios of nickel and aluminium can, for instance, be controlled by selecting suitable feeding speeds of the first and second feeding rollers 22, 29, respectively and/or by selecting different diameters of the first and second wires 21, 28, respectively. However, even if, as in the present example, similar wire diameters and similar feeding speeds are employed, the volumetric aluminium content will generally be significantly lower than the volumetric nickel content because a significant portion of the aluminium will vaporize in the contact zone 25 and not form molten droplets at all.

After forming an initial coating of a thickness in a range from 50 µm to 200 µm, aluminium was leached from the coating by submersing the coated electrode in a 30 wt.% KOH solution having a temperature of 80°C for 5 hours. After leaching, the porous coating had a final void content in a range between 10 and 25%. The residual aluminium content could no longer be determined via image analysis because the initial aluminium patches were leached and resulted in the void patches of the final porous coating. Therefore, residual aluminium content after leaching was determined via EDX analysis to be in a range from 2 to 20 wt.%. The residual aluminium can result from aluminium present in a first component when a low-alloy nickel material is used. Even if essentially pure nickel is used as a first component, some aluminium of the second component can diffuse into the nickel patches during formation of the initial coating and can therefore not be effectively leached. The oxide content (nickel oxide) was visually determined via image analysis to be in the range from 0.5 to 1.2 vol.%. Before leaching, the coating had a surface roughness Rₐ between 10 and 17 µm and after leaching between 350 and 550 µm.

### C. Example 2 (EX2): Preparation of a nickel mesh electrode with a porous catalytic coating obtained by powder plasma spraying

In Example 2, the porous catalytic coating was obtained by applying an initial nickel and aluminium coating on the substrate using a powder plasma spraying system which is schematically shown in Fig. 3. In Example 2, an atmospheric plasma spray system, generally designated by reference sign 40 in Fig. 3 is used. The plasma spraying system 40 comprises a plasma torch 41 where a plasma zone 42 is established between a cathode 43 connected to the negative pole 44 of a power supply and an anode 45 connected to the positive pole 46 of the power supply. The plasma torch 41 was operated between 20 and 60 kW, corresponding to a voltage between 40 and 75 V at currents of 400 to 750 A. The plasma zone 42 was formed by applying the electrical power to a mixture of plasma gases indicated by arrows 47 and 48. Typically, argon or helium were used as a plasma primary gas and nitrogen or hydrogen as a plasma secondary gas. Powder particles were injected into the plasma zone 42 via a nozzle 49 using argon as a carrier gas, indicated by arrow 50. The preferred powder composition comprises 10 weight percent aluminium powder having particle sizes in a range between 45 and 75 µm and 90 weight percent nickel powder having particle sizes between 45 and 90 µm. The aluminium powder was at least 99 percent pure and the nickel powder had a purity of at least 90 percent. The powder particles were molten in the plasma zone 42 and formed molten droplets where were sprayed towards the substrate 11 via a spray cone schematically represented by reference sign 51 in Fig. 3. Upon impacting on the substrate, the molten droplets solidified and formed a coating 12 comprising metallic nickel patches and metallic aluminium patches.

Similar to Example 1, after forming an initial coating of a thickness in a range from 50 µm to 200 µm, aluminium was leached from the coating by submersing the coated electrode in a 30 wt.% KOH solution having a temperature of 80°C, typically for 2 to 5 hours depending on the thickness of the coating. After leaching, the porous coating had similar characteristics as the coating obtained by wire-arc spraying of Example 1.

### D. Counterexample 1 (CEx1)

Counterexample 1 is an anode with a noble metal based catalytic coating. On a nickel mesh similar to the mesh used in Examples 1 and 2, a coating a three-layer coating made of a LiNiO base layer, a NiCoOₓ interlayer and a IrOₓ top layer was obtained by sequentially applying via brushing and thermally decomposing each corresponding precursor solution onto the mesh substrate (or the respective underlying layer).

### E. Counterexample 2 (CEx2)

Counterexample 2 is a bare nickel mesh anode without any additional coating. The anode corresponds to the substrate used in Examples 1, 2 and 3.

### F. Morphology

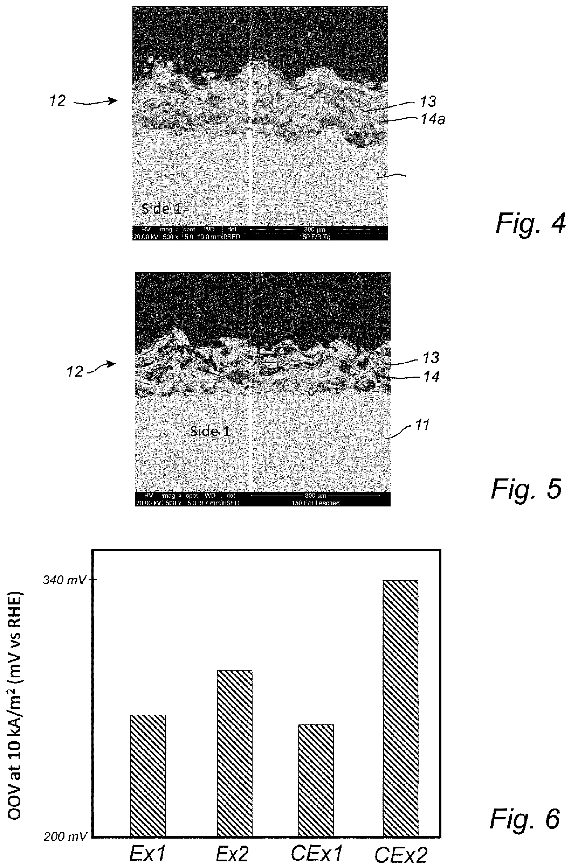

Scanning Electron Microscopy (SEM) was employed to evaluate the morphology of the coating of an anode according to Example 1. Fig. 4 shows a cross-sectional SEM image of a substrate coated with the initial coating, i.e. prior to leaching, and Fig. 5 shows an SEM image of the final porous coating, i.e. after leaching. In Figures 4 and 5, reference sign 11 denotes the nickel substrate, reference sign 12 the catalytic coating and reference sign 13 denotes the nickel patches in the coating. In Fig. 4, reference sign 14a denotes the aluminium patches, while in Fig. 5, reference sign 14 denotes the voids obtained by leaching of the aluminium from the aluminium patches 14a. As can be taken from Fig. 5, the porous coating maintains its structural integrity after leaching although the majority of aluminium has been leached out. As can be taken from the SEM images, the porous coating of the present invention exhibits a lamellar structure of metallic patches extending essentially parallel to the surface of the substrate and void patches also extending essentially parallel to the surface of the substrate.

The surface area of the coating, measured by Krypton adsorption was determined to be in the range of 1 to 10 m²/g.

### G. Oxygen Overvoltage

Corrected Impedance Single Electrode Potential (CISEP) test was employed to characterize the electrochemical performance of the anode of the invention compared to prior art anodes used in alkaline water electrolysis. To determine the oxygen overvoltage of the anode of the present invention, it has been tested as an anode in a three-electrode beaker-cell. The testing conditions are summarized in Table 1.

**Table 1**

| | |
|---|---|
| Electrolyte | 25 wt% KOH in ultrapure H₂O (1.5 l) |
| Temperature | 80°C |
| Cathode | Nickel mesh (projected area 12 cm²) |
| Working anode electrolysis area | 1 cm² projected area |
| Reference electrode | Saturated Calomel Electrode (SCE) |

At first, each sample undergoes 2 hours of pre-electrolysis (conditioning) at 10 kA/m² to stabilise the oxygen overvoltage (OOV). Then, several chronopotentiometry steps are applied to the sample. Final output of the CISEP test is the average of the three steps performed at 10 kA/m², corrected by the resistance of the electrolyte.

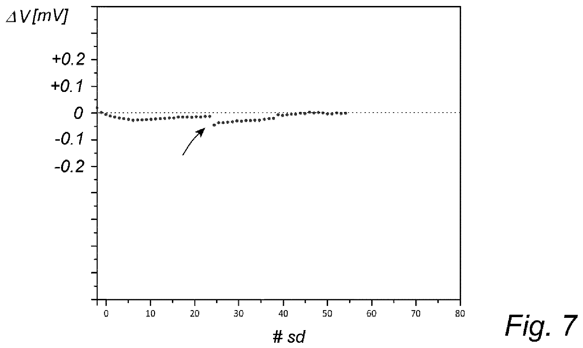

Table 2 and Fig. 6 summarize a comparison between the wire-arc sprayed anode of Example 1 (Ex1), the powder plasma sprayed anode of Example 2 (Ex2), the iridium-based anode of Counterexample 1 (CEx1), and the bare nickel anode of Counterexample 2 (CEx2):
As can be taken therefrom, the noble metal anode of Comparative Example 1 (column 3 of Fig. 7) exhibits an oxygen overvoltage of 261 mV measured at a current density of 10 kA/m². The wire-arc sprayed electrode of Example 1 exhibits an oxygen overvoltage of 265 mV representing a typical value obtained from various samples which were individually determined within a range of 260 to 270 mV. The plasma-sprayed anode of Example 2 exhibits an oxygen overvoltage of 290 mV, representing individual sample values in a range from 285 to 295 mV.

**Table 2**

| | **OOV vs. NHE [mV] @10 kA/m²** |
|---|---|
| Ex1 | 265 |
| Ex2 | 290 |
| CEx1 | 261 |
| CEx2 | 340 |

The oxygen overvoltages obtained with the anode of the present invention are well below the oxygen overvoltage of a bare nickel anode. The oxygen overvoltage of the wire-arc sprayed anode of Example 1 is even in the range of the costly noble metal anode of Counterexample 1.

### H. Stability test (Shutdown resistance)

The anode of Example 1 (wire-arc sprayed) was subjected to a stability test where the anode was installed in an electrolysis cell with a nickel cathode acting as counterelectrode. In order to assess the resistance of the anode to inversion of polarity and to estimate its' resistance to simulated plant shutdowns, shutdown tests have been performed under the operational conditions, as summarized in Table 3 below:

**Table 3**

| | |
|---|---|
| Temperature | 80°C |
| Electrolyte | 30 wt.% KOH in ultrapure H₂O |
| Current density | 10 kA/m² |

The following test protocol was carried out: After a break-in period of 48 hours, a 6-hour shutdown was simulated by shortening the electrolysis cell with pumps staying on and letting the temperature drop to room temperature. After each shutdown period, electrolysis was continued for 6 hours at the operating conditions of Table 2 and the oxygen overvoltage was recorded.

In Fig. 7, the x-axis denotes the number of shutdowns (# sd), while the y-axis denotes the change in cell voltage. As can be taken therefrom, over the course of 55 shutdown cycles, the cell voltage differed only by 0.05 V. The Arrow in Fig. 7 indicates an adjustment of the electrolyte back to 30 weight percent KOH after 25 shutdown cycles resulting in a small step-like change in the cell voltage. These results demonstrate that the anode of the present invention offers a very good mechanical and electrochemical stability even under harsh conditions of intermittent operation typical for alkaline water electrolysis using renewable energy sources.

As compared to plasma-sprayed Raney nickel electrodes, the anodes of the present invention have the advantage of lower material costs because no highly alloyed nickel aluminium powders are required. Especially for electric arc-wire spraying, the process costs are low because it avoids creation of a high energy plasma from suitable gas mixtures. According to the present invention, only compressed air is required as an atomizing gas.

With the method of the present invention, the nickel aluminides content is low leading to an increased robustness. Especially with electric are-wire spraying, the mechanical robustness is high because coatings of several hundred microns can be prepared while thicknesses of nickel Raney coatings should be limited to a few tens of micrometers because of their poor mechanical properties especially after leaching. Finally, using pure nickel and aluminium materials (wires or powders, respectively) or only moderately alloyed nickel wires and powders, a low crystal defect content is achieved. While it is known that crystal defects increase the activity of electrodes, the time stability is poor because the defect-related activity decreases over time.

The preceding description is not intended to limit the invention, which may be used according to various embodiments without however deviating from the objectives and whose scope is uniquely defined by the appended claims.

In the description and in the claims of the present application, the terms "comprising", "including" and "containing" are not intended to exclude the presence of other additional elements, components or process steps.

The discussion of documents, items, materials, devices, articles and the like is included in this description solely with the aim of providing a context for the present invention. It is not suggested or represented that any or all of these topics formed part of the prior art or formed a common general knowledge in the field relevant to the present invention before the priority date for each claim of this application.

## Claims

1. An anode for oxygen evolution in electrolytic processes comprising a nickel-based planar substrate having a first side and second side and a porous catalytic coating formed on at least one side of said substrate, wherein said porous catalytic coating exhibits a lamellar morphology made from metallic patches and void patches, said metallic patches being made from a material selected from nickel, nickel oxide, a nickel-aluminium alloy, said nickel-aluminium alloy being a low-alloy nickel component comprising at least 80 wt.% nickel, or combinations thereof,
wherein said metallic patches of said porous coating have a size distribution such that their lengths, measured parallel to the planar substrate, is predominately at least 25 µm.

2. The anode according to claim 1, wherein porous catalytic coating has a void ratio within a range from 5 to 50%, preferably from 10 to 25%.

3. The anode according to one of claims 1 or 2, wherein said porous catalytic coating has a thickness within a range from 50 µm to 200 µm.

4. The anode according to claim 3, wherein said porous catalytic coating formed on at least one side of said planar substrate has a thickness within a range from 100 µm to 180 µm.

5. The anode according to claim 4, wherein said porous catalytic coating is formed on both sides of said metal substrate.

6. The anode according to one of claims 1 to 5, wherein said metallic patches of said porous catalytic coating comprise 80 to 98 wt.% nickel or nickel oxide and 20 to 2 wt.% aluminium, referring to the metallic elements.

7. The anode according to claim 6, wherein said porous catalytic coating comprises 0.1 to 2 vol.% nickel oxide.

8. The anode according to one of claims 1 to 7, wherein said porous catalytic coating has a surface area within a range of 5 to 20 m²/g (BET).

9. The anode according to one of claims 1 to 8, wherein said nickel-based substrate is a nickel mesh having a thickness within the range of 0.2 to 1.5 mm.

10. The anode according to one of claims 1 to 8, wherein said porous catalytic coating is obtained by powder plasma spraying or electric wire arc spraying an initial coating comprising a mixture of a first component comprising predominately nickel and a second component comprising predominantly aluminium on at least one side of said substrate and subsequent leaching of aluminium from said initial coating.

11. A method for the production of an anode for oxygen evolution in electrolytic processes according to claim 1, comprising the following steps:
a) providing a planar nickel-based metal substrate having a first side and a second side;
b) providing a first coating material comprising at least 80 wt.% nickel and providing a second coating material comprising at least 80 wt.% aluminium;
c) depositing melted droplets from said first coating material and melted droplets from said second coating material on at least one side of said substrate to form an initial coating;
d) leaching of aluminium from said initial coating in an alkaline bath to form a porous catalytic coating.

12. The method of claim 11, wherein in step b) said first coating material is a nickel powder and said second coating material comprising is an aluminium powder, and in step c) melted droplets of said nickel powder and melted droplets of said aluminium powder are deposited on said substrate via plasma spraying.

13. The method of claim 11, wherein in step b) said first coating material is a first consumable metal wire comprising at least nickel and said second coating material is a second consumable wire comprising at least aluminium, and in step c) melted droplets from said first and second metal wires are deposited on said substrate via electric wire-arc spraying.

14. The method according to one of claims 11 to 13, wherein in step c), an initial coating is applied to both sides of said substrate.

15. The method according to one of claims 11 to 14, wherein step d) is carried out in an aqueous alkaline hydroxide solution at a temperature in the range from 10 and 100 °C for a time period between 10 min and 36 hours, preferably 2 to 24 hours.

## Patentansprüche

1. Anode für die Sauerstoffentwicklung in elektrolytischen Prozessen, umfassend ein nickelbasiertes planares Substrat mit einer ersten Seite und einer zweiten Seite und einer porösen katalytischen Beschichtung, die auf mindestens einer Seite des Substrats ausgebildet ist, wobei die poröse katalytische Beschichtung eine lamellare Morphologie aufweist, die aus metallischen Bereichen und Leerraumbereichen besteht, wobei die metallischen Bereiche aus einem Material bestehen, das ausgewählt ist aus Nickel, Nickeloxid, einer Nickel-Aluminium-Legierung, wobei die Nickel-Aluminium-Legierung eine niedriglegierte Nickelkomponente mit mindestens 80 Gew.-% Nickel ist, oder Kombinationen davon,
wobei die metallischen Bereiche der porösen Beschichtung eine solche Größenverteilung aufweisen, dass ihre Längen, gemessen parallel zum ebenen Substrat, überwiegend mindestens 25 µm betragen.

2. Anode gemäß Anspruch 1, wobei die poröse katalytische Beschichtung einen Leerraumanteil in einem Bereich von 5 bis 50 %, vorzugsweise von 10 bis 25 %, aufweist.

3. Anode gemäß einem der Ansprüche 1 oder 2, wobei die poröse katalytische Beschichtung eine Dicke im Bereich von 50 µm bis 200 µm aufweist.

4. Anode gemäß Anspruch 3, wobei die poröse katalytische Beschichtung, die auf mindestens einer Seite des ebenen Substrats ausgebildet ist, eine Dicke im Bereich von 100 µm bis 180 µm aufweist.

5. Anode gemäß Anspruch 4, wobei die poröse katalytische Beschichtung auf beiden Seiten des Metallsubstrats ausgebildet ist.

6. Anode gemäß einem der Ansprüche 1 bis 5, wobei die metallischen Bereiche der porösen katalytischen Beschichtung 80 bis 98 Gew.-% Nickel oder Nickeloxid und 20 bis 2 Gew.-% Aluminium, bezogen auf die metallischen Elemente, umfassen.

7. Anode gemäß Anspruch 6, wobei die poröse katalytische Beschichtung 0,1 bis 2 Vol.- % Nickeloxid umfasst.

8. Anode gemäß einem der Ansprüche 1 bis 7, wobei die poröse katalytische Beschichtung eine Oberfläche im Bereich von 5 bis 20 m²/g (BET) aufweist.

9. Anode gemäß einem der Ansprüche 1 bis 8, wobei das nickelbasierte Substrat ein Nickelnetz mit einer Dicke im Bereich von 0,2 bis 1,5 mm ist.

10. Anode gemäß einem der Ansprüche 1 bis 8, wobei die poröse katalytische Beschichtung durch Pulverplasmaspritzen oder elektrisches Lichtbogenspritzen einer Anfangsbeschichtung, die eine Mischung aus einer ersten Komponente, die überwiegend Nickel umfasst, und einer zweiten Komponente, die überwiegend Aluminium umfasst, auf mindestens einer Seite des Substrats umfasst, und anschließendes Auslaugen von Aluminium aus der Anfangsbeschichtung erhalten wird.

11. Verfahren zur Herstellung einer Anode für die Sauerstoffentwicklung in elektrolytischen Prozessen gemäß Anspruch 1, umfassend die folgenden Schritte:
a) Bereitstellen eines planaren Metallsubstrats auf Nickelbasis mit einer ersten Seite und einer zweiten Seite;
b) Bereitstellen eines ersten Beschichtungsmaterials, das mindestens 80 Gew.- % Nickel umfasst, und eines zweiten Beschichtungsmaterials, das mindestens 80 Gew.-% Aluminium umfasst;
c) Aufbringen geschmolzener Tröpfchen aus dem ersten Beschichtungsmaterial und geschmolzener Tröpfchen aus dem zweiten Beschichtungsmaterial auf mindestens eine Seite des Substrats, um eine Anfangsbeschichtung zu bilden;
d) Auslaugen von Aluminium aus der Anfangsbeschichtung in einem alkalischen Bad, um eine poröse katalytische Beschichtung zu bilden.

12. Verfahren gemäß Anspruch 11, wobei in Schritt b) das erste Beschichtungsmaterial ein Nickelpulver ist und das zweite Beschichtungsmaterial ein Aluminiumpulver ist, und in Schritt c) geschmolzene Tröpfchen des Nickelpulvers und geschmolzene Tröpfchen des Aluminiumpulvers durch Plasmaspritzen auf das Substrat aufgebracht werden.

13. Verfahren gemäß Anspruch 11, wobei in Schritt b) das erste Beschichtungsmaterial ein erster verbrauchbarer Metalldraht ist, der mindestens Nickel umfasst, und das zweite Beschichtungsmaterial ein zweiter verbrauchbarer Draht ist, der mindestens Aluminium umfasst, und in Schritt c) geschmolzene Aluminiumtropfen aus dem ersten und zweiten Metalldraht auf das Substrat durch elektrisches Lichtbogenspritzen aufgebracht werden.

14. Verfahren gemäß einem der Ansprüche 11 bis 13, wobei in Schritt c) eine erste Beschichtung auf beide Seiten des Substrats aufgebracht wird.

15. Verfahren gemäß einem der Ansprüche 11 bis 14, wobei Schritt d) in einer wässrigen alkalischen Hydroxidlösung bei einer Temperatur im Bereich von 10 bis 100 °C für einen Zeitraum zwischen 10 Minuten und 36 Stunden, vorzugsweise 2 bis 24 Stunden, durchgeführt wird.

## Revendications

1. Anode pour le dégagement d'oxygène dans des procédés électrolytiques, comprenant un substrat plan à base de nickel ayant une première face et une seconde face et un revêtement catalytique poreux formé sur au moins l'une des deux faces dudit substrat, dans laquelle ledit revêtement catalytique poreux présente une morphologie lamellaire constituée de zones métalliques et de zones vides, lesdites zones métalliques étant constituées d'un matériau choisi parmi le nickel, l'oxyde de nickel, un alliage nickel-aluminium, ledit alliage nickel-aluminium étant un composant à base de nickel faiblement allié comprenant au moins 80% en poids de nickel, ou leurs combinaisons,
lesdites zones métalliques dudit revêtement poreux ayant une distribution de taille telle que leur longueur, mesurée parallèlement au substrat plan, est principalement d'au moins 25 µm.

2. Anode selon la revendication 1, dans laquelle le revêtement catalytique poreux présente un taux de vide compris entre 5 et 50 %, de préférence de 10 à 25%.

3. Anode selon l'une des revendications 1 et 2, dans laquelle ledit revêtement catalytique poreux a une épaisseur comprise entre 50 µm et 200 µm.

4. Anode selon la revendication 3, dans laquelle ledit revêtement catalytique poreux formé sur au moins une face dudit substrat plan a une épaisseur comprise entre 100 µm et 180 µm.

5. Anode selon la revendication 4, dans laquelle ledit revêtement catalytique poreux est formé sur les deux faces dudit substrat métallique.

6. Anode selon l'une des revendications 1 à 5, dans laquelle lesdites zones métalliques dudit revêtement catalytique poreux comprennent 80 à 98% en poids de nickel ou d'oxyde de nickel et 20 à 2% en poids d'aluminium, se référant aux éléments métalliques.

7. Anode selon la revendication 6, dans laquelle ledit revêtement catalytique poreux comprend 0,1 à 2% en volume d'oxyde de nickel.

8. Anode selon l'une des revendications 1 à 7, dans laquelle ledit revêtement catalytique poreux a une surface spécifique comprise entre 5 et 20 m²/g (BET).

9. Anode selon l'une des revendications 1 à 8, dans laquelle ledit substrat à base de nickel est une maille de nickel dont l'épaisseur est comprise entre 0,2 et 1,5 mm.

10. Anode selon l'une des revendications 1 à 8, dans laquelle ledit revêtement catalytique poreux est obtenu par projection plasma de poudre ou projection à l'arc électrique d'un revêtement initial comprenant un mélange d'un premier composant comprenant principalement du nickel et d'un deuxième composant comprenant principalement de l'aluminium sur au moins une face dudit substrat, puis lixiviation de l'aluminium à partir dudit revêtement initial.

11. Procédé de production d'une anode pour le dégagement d'oxygène dans des procédés électrolytiques selon la revendication 1, comprenant les étapes suivantes :
a) fourniture d'un substrat métallique plan à base de nickel ayant une première face et une seconde face ;
b) fourniture d'un premier matériau de revêtement comprenant au moins 80% en poids de nickel et fourniture d'un deuxième matériau de revêtement comprenant au moins 80% en poids d'aluminium ;
c) dépôt de gouttelettes fondues provenant dudit premier matériau de revêtement et de gouttelettes fondues provenant dudit deuxième matériau de revêtement sur au moins une face dudit substrat pour former un revêtement initial ;
d) lixiviation de l'aluminium à partir dudit revêtement initial dans un bain alcalin pour former un revêtement catalytique poreux.

12. Procédé selon la revendication 11, dans lequel, dans l'étape b), ledit premier matériau de revêtement est une poudre de nickel et ledit deuxième matériau de revêtement est une poudre d'aluminium, et dans l'étape c), les gouttelettes fondues de ladite poudre de nickel et les gouttelettes fondues de ladite poudre d'aluminium sont déposées sur ledit substrat par projection plasma.

13. Procédé selon la revendication 11, dans lequel, dans l'étape b), ledit premier matériau de revêtement est un premier fil métallique consommable comprenant au moins du nickel et ledit deuxième matériau de revêtement est un deuxième fil consommable comprenant au moins de l'aluminium, et dans l'étape c), les gouttelettes fondues provenant desdits premier et deuxième fils métalliques sont déposées sur ledit substrat par projection à l'arc électrique.

14. Procédé selon l'une des revendications 11 à 13, dans lequel, dans l'étape c), un revêtement initial est appliqué sur les deux faces dudit substrat.

15. Procédé selon l'une des revendications 11 à 14, dans lequel l'étape d) est réalisée dans une solution aqueuse d'hydroxyde alcalin à une température comprise entre 10 et 100°C et pendant une période de temps comprise entre 10 min et 36 heures, de préférence de 2 à 24 heures.
